# EUROPÄISCHE PATENTANMELDUNG

(11) **EP 2 653 436 A1**
(43) Veröffentlichungstag der Anmeldung: **23.10.2013**
(21) Anmeldenummer: 13164411.4
(22) Anmeldetag: 19.04.2013
(51) Int. Cl.: B67B 3/20, B65G 47/86, B67C 3/24

(54) **Vorrichtung zum Aufnehmen von mit einem Halsring versehenen Flaschen in einem Verschließer**

(30) Priorität: 20.04.2012 DE 102012103525
(71) Anmelder: Krones AG, 93073 Neutraubling (DE)
(72) Erfinder: Buchhauser, Klaus, 93073 Neutraubling (DE)
(74) Vertreter: Nordmeyer, Philipp Werner

(57) **Zusammenfassung**

Die vorliegende Erfindung betrifft eine Vorrichtung (1) zum Aufnehmen von mit einem Halsring versehenen Flaschen in einem Verschließer, umfassend eine Halsführung (2) mit einer Halsaufnahmetasche (20) zur Aufnahme des Halses der Flasche, wobei auf der Oberseite der Halsführung mindestens eine Verdrehsicherung (22) zum Eingriff mit der Unterseite des Halsringes vorgesehen ist, wobei eine im Bereich der Halsführung (2) angeordnete Klemmvorrichtung (3) zum Halten des Halses der Flasche in der Halsaufnahmetasche (20) vorgesehen ist.

## Beschreibung

### Technisches Gebiet

Die vorliegende Erfindung betrifft eine Vorrichtung zum Aufnehmen von mit einem Halsring versehenen Flaschen in einem Verschließer, bevorzugt zum Aufnehmen von Kunststoffflaschen mit einem Halsring in einem Verschließer zum Verschließen der Kunststoffflaschen mit Kunststoffschraubverschlüssen.

### Stand der Technik

Es ist bekannt, Flaschen in einem Verschließer in einer Halsführung mit einer Halsaufnahmetasche, in welche die jeweiligen Flaschenhälse eingeführt werden, aufzunehmen und in dieser Form durch den Verschließer zu transportieren. Hierzu ist die Halsführung typischerweise in Form eines Sternrades ausgebildet, derart, dass die Halsaufnahmetaschen die jeweiligen Flaschenhälse zentriert so aufnehmen können, dass sie zentriert unterhalb eines Verschließerkonus angeordnet sind, mittels welchem der eigentliche Verschließvorgang der Flasche mit einem Kunststoffschraubverschluss durchgeführt wird.

Da beim Schraubverschließen von Flaschen ein Drehmoment aufgebracht wird, welches von der Halsführung aufgenommen werden muss um ein Mitdrehen der Flasche zu vermeiden und ein zuverlässiges Aufschrauben beispielsweise eines Kunststoffschraubverschlusses zu ermöglichen, sind auf der Oberseite der Halsführung typischerweise spitze Vorsprünge in Form so genannter Spikes vorgesehen, welche mit der Unterseite des Halsrings der Kunststoffflasche in Eingriff kommen. Die Spikes stellen dabei eine Verdrehsicherung für die Flaschen bereit, so dass das zum Schraubverschließen notwendige Drehmoment von dem jeweiligen Verschließerkonus aufgebracht werden kann.

Eine Vorrichtung zum Fördern von Flaschen mit Halskragen, welche eine solche Spikeplatte umfasst, ist beispielsweise aus der DE 698 11 228 T2 bekannt.

Die Flaschen werden in der Halsführung beziehungsweise in den Halsaufnahmetaschen, welche radial nach außen hin geöffnet sind um ein Zuführen und Ausleiten der Flaschen zu ermöglichen, durch eine Halsaußenführung gehalten.

Eine solche Halsaußenführung in einem Verschließer muss exakt justiert werden, um sicherzustellen, dass sich die Mündung der in der Halsaufnahmetasche aufgenommenen Flasche zentriert unterhalb des jeweiligen Verschließerkonus befindet. Diese exakte Zentrierung ist notwendig um eine exakte Verschraubung der Kunststoffschraubverschlüsse zu ermöglichen und dadurch ein zuverlässiges Verschließen der jeweiligen Getränkebehältnisse zu erreichen bei gleichzeitig geringem Verschleiß am Verschließerkonus. Andererseits bringt die Halsaußenführung durch ihre waagerechten Flächenanteile bezüglich der Reinigung der Anlage einigen Aufwand mit sich. Gerade in Aseptikanlagen wird beim Anlagendesign versucht, den Anteil waagerechter Flächen möglichst gering zu halten, um den Sterilisierungs- beziehungsweise Reinigungsprozess zu unterstützen und stehende Flüssigkeiten innerhalb der Anlage weitgehend zu vermeiden.

### Darstellung der Erfindung

Ausgehend vom bekannten Stand der Technik ist es eine Aufgabe der vorliegenden Erfindung, eine weiter verbesserte Vorrichtung zum Aufnehmen von Flaschen in einem Verschließer anzugeben.

Diese Aufgabe wird mit einer Vorrichtung zum Aufnehmen von Flaschen in einem Verschließer mit den Merkmalen des Anspruchs 1 gelöst. Vorteilhafte Weiterbildungen ergeben sich aus den Unteransprüchen.

Entsprechend umfasst die Vorrichtung zum Aufnehmen von mit einem Halsring versehenen Flaschen in einem Verschließer eine Halsführung mit einer Halsaufnahmetasche zur Aufnahme des Halses der Flasche, wobei auf der Oberseite der Halsführung mindestens eine Verdrehsicherung zum Eingriff mit der Unterseite des Halsringes vorgesehen ist. Als Halsring im Sinne der Erfindung wird jegliche am Hals der Flasche angeordnete wenigstens teilweise umlaufende Ausprägung, insbesondere mit einer von der Flaschenmündung weg gerichteten Oberfläche, verstanden, die geeignet ist, um mit einer Verdrehsicherung in Eingriff gebracht zu werden. Erfindungsgemäß ist eine im Bereich der Halsführung angeordnete Klemmvorrichtung zum Halten des Halses der Flasche in der Halsaufnahmetasche vorgesehen.

Durch das Bereitstellen einer an der Halsführung angeordneten Klemmvorrichtung zum Halten des Halses der Flasche in der Halsaufnahmetasche kann auf eine Halsaußenführung vollständig verzichtet werden. Die Klemmvorrichtung übernimmt dabei die Aufgabe der Halsaußenführung und kann dadurch, dass sie direkt an der Halsführung angeordnet ist, bezüglich der Halsaufnahmetasche einfach justiert werden. Verwerfungen in anderen Anlagenkomponenten, beispielsweise des Anlagentisches, an welchem die herkömmliche Halsaußenführung typischerweise gehalten wurde, haben durch das Bereitstellen der an der Halsführung angeordneten Klemmvorrichtung keinen Einfluss auf die Justage der Vorrichtung.

Entsprechend kann durch die an der Halsführung angeordnete Klemmvorrichtung weiterhin auch das Verhalten der jeweiligen Vorrichtung zum Aufnehmen von mit einem Halsring versehenen Flaschen bezüglich deren mikrobakterieller Belastung beziehungsweise deren Anwendbarkeit in einer Aseptikanlage weiter verbessert werden, da waagerechte Flächenanteile, welche durch die herkömmliche Halsaußenführung eingetragen wurden, durch die an der Halsführung angeordnete Klemmvorrichtung fortfallen.

Bevorzugt ist mit der Klemmvorrichtung eine Klemmkraft zum Halten des Halses der Flasche im Wesentlichen in der Ebene der Halsaufnahmetasche aufbringbar. Mit anderen Worten ist die Klemmvorrichtung in der Ebene der Halsaufnahmetasche so angeordnet beziehungsweise greift an den Hals der Flasche so an, dass die Flasche in die Halsaufnahmetasche der Halsführung in der Ebene der Halsaufnahmetasche eingedrückt wird. Auf diese Weise kann eine exakte Ausrichtung der Mündung der Flasche unterhalb des Verschließerkonus derart erreicht werden, dass ein exaktes Verschrauben eines Kunststoffschraubverschlusses beispielsweise auf einer Kunststoffflasche möglich wird.

Die Klemmvorrichtung ist bevorzugt mit zwei Klemmelementen ausgebildet, welche symmetrisch zu der Halsaufnahmetasche angeordnet sind. Auf diese Weise kann das Bereitstellen einer exakten Ausrichtung der Mündung, auf welche der Kunststoffschraubverschluss aufgeschraubt werden soll, mit der Schraubachse des Verschließerkonus erreicht werden. Durch die symmetrische Anordnung der Klemmelemente kann weiterhin auch eine genau zentrierte Aufnahme des Mündungsbereiches in der Halsaufnahmetasche erreicht werden.

In einer Variante ist die Klemmvorrichtung mit lediglich einem einzigen Klemmelement ausgebildet, welches bevorzugt jedoch so um den Flaschenhals herum führbar ist, dass sowohl eine genaue Ausrichtung des Mündungsbereiches mit der Schraubachse des Verschließerkonus ermöglicht wird, als auch eine zentrierte Anordnung in der Halsaufnahmetasche erreicht wird.

Die Klemmvorrichtung weist in einer weiteren bevorzugten Ausführungsvariante mindestens ein passives Klemmelement auf, welches in Klemmrichtung auf die Halsaufnahmetasche hin vorgespannt ist. Auf diese Weise wird eine einfache mechanische Ausführung der Klemmvorrichtung erreicht, welche beispielsweise durch die Ausbildung des Klemmelementes mit einem elastischen Kunststoff oder einem Federblech beziehungsweise Federstahl erreicht werden kann. Auf diese Weise können aktive Komponenten vermieden werden, wodurch eine separate Ansteuerung des Klemmelements nicht notwendig wird und entsprechend aktive Komponenten nicht in die Anlage eingebracht werden, welche gerade im Bereich von Aseptikanlagen weitere Reinigungsschritte erfordern könnten.

Die Klemmvorrichtung kann dabei beispielsweise in Form eines C ausgebildet sein.

In einer Variante weist die Klemmvorrichtung mindestens ein aktives Klemmelement auf, bei welchem der Klemmvorgang über einen Aktuator durchführbar ist. Mit anderen Worten sorgt der Aktuator dafür, dass das Klemmelement von einer Klemmposition in eine geöffnete Position und wieder in die Klemmposition zurück überführbar ist. Auf diese Weise lässt sich eine sehr exakte Klemmung der Flasche in der Halsaufnahmetasche erreichen, wobei die Belastung, welche auf die zu verschließende Flasche ausgeübt wird, gering gehalten wird, da die Klemmvorrichtung aktiv geöffnet werden kann. Insbesondere können durch aktive Klemmelemente Schleifspuren, welche durch das Einschieben einer Flasche in ein passives Klemmelement auftreten können, vermieden werden.

Die Klemmvorrichtung kann weiterhin federnd gelagerte Klemmelemente umfassen, beispielsweise federvorgespannte Kugeln oder federvorgespannte Walzen, welche den eigentlichen Klemmvorgang übernehmen. Auf diese Weise kann ein guter Kompromiss eines solchen passiven Klemmelementes mit den Anforderungen einer geringen Belastung der Flasche und insbesondere des Vermeidens von Schleifspuren auf der Flasche hergestellt werden. Die eigentliche Klemmkraft wird in diesem Fall ebenfalls über die Federvorbelastung der Kugeln beziehungsweise Walzen erreicht.

Bevorzugt sind die vorgenannten Klemmelemente in der Ebene der Halsführung beziehungsweise in der durch die Halsaufnahmetasche gebildeten Ebene angeordnet, um einer Verkantung der in der Halsaufnahmetasche aufgenommenen Flasche aufgrund der Klemmkraft zu entgegnen.

Bevorzugt ist die Verdrehsicherung in Form einer Spikeplatte ausgebildet, welche im Bereich der Halsaufnahme beziehungsweise im Bereich der Halsaufnahmetasche ausgebildet ist. Durch die Verwendung einer Spikeplatte kann bei einer Abnutzung der Vorsprünge beziehungsweise Spikes durch einfaches Austauschen der Spikeaufnahmeplatte die Funktionalität der Aufnahmevorrichtung auf einfache Weise und effizient wieder hergestellt werden.

Die Klemmvorrichtung kann weiterhin mindestens ein Klemmelement zum Eingriff mit dem Halsring der Flasche aufweisen. Auch durch ein Klemmen der Flasche am Halsring kann eine zuverlässige Führung erreicht werden. Bevorzugt sind in diesem Zusammenhang auf der Oberseite der Halsführung Zentriervorsprünge angeordnet, welche mit dem Halsring in Eingriff kommen können. Durch ein Verklemmen durch entsprechende, mit dem Halsring in Eingriff tretende, Klemmelemente und das Aufbringen einer Klemmkraft in Richtung der mit dem Halsring ebenfalls in Eingriff kommenden Klemmvorsprünge kann wiederum eine exakte Ausrichtung des Mündungsbereiches unter dem Verschließerkonus erreicht werden.

Bevorzugt kann die vorbeschriebene Aufnahmevorrichtung in einem Schraubverschließer mit einem Verschließerkonus zum Verschließen von Flaschen mit einem Halsring durch Kunststoffschraubverschlüsse unterhalb des Verschließerkonus angeordnet werden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch in einer perspektivischen Ansicht eine Vorrichtung zum Aufnehmen von mit einem Halsring versehenen Flaschen in einer ersten Ausführungsform, und

- Figur 2: eine Vorrichtung zum Aufnehmen von mit einem Halsring versehenen Flaschen in einer zweiten Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet und auf eine wiederholte Beschreibung dieser Elemente wird in der nachfolgenden Beschreibung teilweise verzichtet, um Redundanzen zu vermeiden.

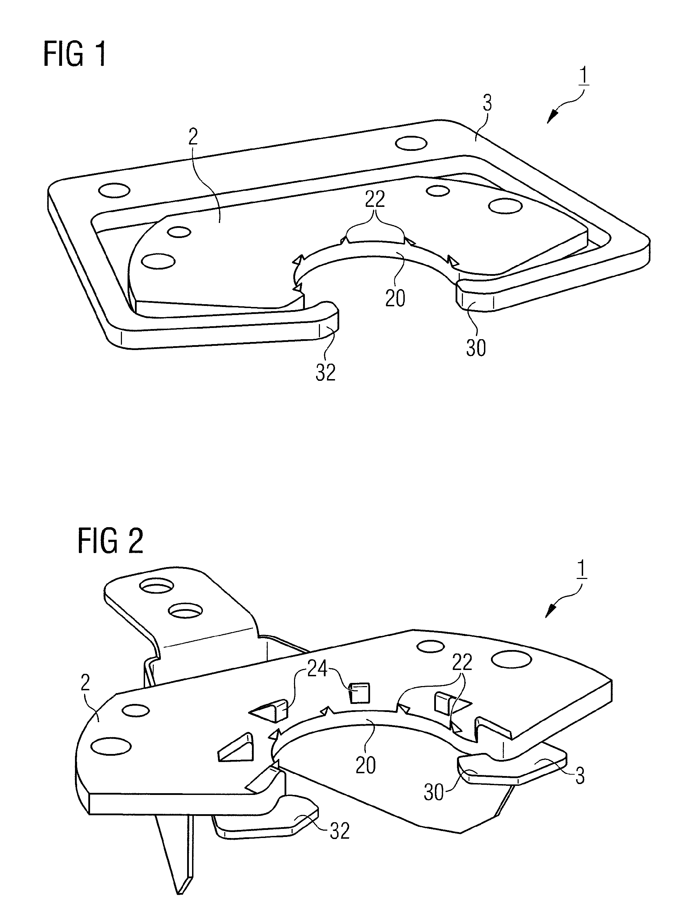

In Figur 1 ist schematisch in einer perspektivischen Ansicht eine Vorrichtung 1 zum Aufnehmen von mit einem Halsring versehenen Flaschen in einem Verschließer, bevorzugt einem Schraubverschließer zum Verschließen von Behältnissen mit Kunststoffschraubverschlüssen, gezeigt.

Eine Halsführung 2, auf welcher der Halsring der aufzunehmenden Flasche im Wesentlichen aufliegt, ist gezeigt, wobei die Halsführung 2 eine Halsaufnahmetasche 20 aufweist, in welche der Hals der aufzunehmenden Flasche aufgenommen wird. Der Halsring der Flasche befindet sich dabei oberhalb der durch die Halsaufnahme 2 gebildeten Ebene.

Eine Verdrehsicherung 22 ist in Form von Vorsprüngen an der Oberseite der Halsführung 2 vorgesehen. Die Verdrehsicherung 22 dient dazu, die Flasche beim Aufschrauben eines Kunststoffschraubverschlusses zu halten und eine Rotation um deren Hochachse zu vermeiden. Mit anderen Worten nimmt die Verdrehsicherung 22 das über den Kunststoffschraubverschluss auf die Flasche aufgebrachte Drehmoment auf, so dass der Schraubvorgang zuverlässig durchgeführt werden kann. Die Verdrehsicherung 22 ist bevorzugt in Form von spitzen Spikes ausgebildet.

Die Vorsprünge beziehungsweise Spikes der Verdrehsicherung 22 greifen von unten in den Halsring der zu verschraubenden Flasche ein und wirken auf diese Weise als Verdrehsicherung, wenn durch den Verschließerkonus ein entsprechendes Drehmoment und gleichzeitig eine entsprechende Verschließkraft aufgebracht werden.

Die Halsführung 2 kann entweder durch eine separat an einer Transportvorrichtung eines Verschließers anbringbare Spikeplatte, welche sowohl die Verdrehsicherung 22 als auch die Halsaufnahmetasche 20 umfasst, vorgesehen sein, oder mit der Transportvorrichtung integriert sein.

Eine im Bereich der Halsführung 2 angeordnete Klemmvorrichtung 3 ist vorgesehen, welche zum Halten des Halses der Flasche in der Halsaufnahmetasche 20 dient. Die Klemmvorrichtung weist in dem gezeigten Ausführungsbeispiel zwei Klemmelemente 30, 32 auf, welche symmetrisch zu der Halsaufnahmetasche 20 angeordnet sind. Die Klemmelemente 30, 32 sind als passive Klemmelemente ausgebildet und elastisch in Klemmrichtung auf die Halsaufnahmetasche 20 hin vorgespannt. Wenn entsprechend ein Flaschenhals in der Halsaufnahmetasche 20 eingebracht wird, weichen die Klemmelemente 30, 32 zunächst zur Seite, um den Hals in die Halsaufnahmetasche 20 eintreten zu lassen, und umschließen dann teilweise die der Halsaufnahmetasche 20 entgegen gesetzte Seite des Halses, um entsprechend ihrer Vorspannung eine Klemmkraft auf den Hals in Richtung der Halsaufnahmetasche 20 hin auszuüben. Durch das Aufbringen der Klemmkraft der Klemmelemente 30, 32 wird der Hals in der Halsaufnahmetasche 20 sicher aufgenommen und zentriert in der Halsaufnahmetasche 20 gehalten. Dabei wird er symmetrisch von beiden Seiten aus durch die Klemmelemente 30, 32 in die Halsaufnahmetasche 20 herein gepresst.

Die Klemmelemente 30, 32 können beispielsweise aus einem elastischen Kunststoffmaterial oder einem Federblech- oder Federstahlmaterial ausgebildet sein.

Die beiden Klemmelemente 30, 32 sind in dem in Figur 1 gezeigten Ausführungsbeispiel im Wesentlichen in der durch die Halsführung 2 und insbesondere durch die Halsaufnahmetasche 20 gebildete Ebene angeordnet. Entsprechend wirkt die durch die Klemmelemente 30, 32 ausgeübte Klemmkraft im Wesentlichen senkrecht auf die Flächen der Halsaufnahmetasche 20, so dass die gehaltene Flasche durch die aufgebrachte Klemmkraft nicht verkantet, sondern exakt positioniert wird.

In einer bevorzugten Variante sind die Klemmelemente 30, 32 leicht oberhalb beziehungsweise leicht unterhalb der durch die Halsaufnahmetasche 20 gebildeten Ebene angeordnet, aber stets so, dass durch die aufgebrachte Klemmkraft die Flasche nicht verkantet.

Figur 2 zeigt eine zweite Ausführungsform einer Vorrichtung 1 zum Aufnehmen von mit einem Halsring versehenen Flaschen. Eine Halsführung 2 ist ähnlich der in Figur 1 gezeigten Halsführung 2 gezeigt. Eine Halsaufnahmetasche 20 ist ebenfalls vorgesehen, genauso wie die Verdrehsicherung 22 in Form des Spikes.

Zusätzlich zu den Spikes 22 sind Zentriervorsprünge 24 auf der Oberseite der Halsführung 2 vorgesehen, welche zur Zentrierung des Halsringes dienen. In dem in Figur 2 gezeigten Ausführungsbeispiel wird die eigentliche Zentrierung der Mündung der Flasche, auf welcher der Kunststoffschraubverschluss aufgeschraubt werden soll, auch durch eine Zentrierung am Halsring der Flasche durchgeführt, wobei der Halsring an den Zentriervorsprüngen 24 auf der Oberseite der Halsführung 2 anliegt.

Eine Klemmvorrichtung 3 mit zwei symmetrisch zur Halsaufnahmetasche 20 angeordneten Klemmelementen 30, 32 ist auch in diesem Ausführungsbeispiel vorgesehen. In dem in Figur 2 gezeigten Ausführungsbeispiel liegen die Klemmelemente 30, 32 direkt unterhalb der durch die Halsaufnahmetasche 20 gebildeten Ebene. Die Klemmkraft wird entsprechend zwischen den Klemmelementen 30, 32 und den Zentriervorsprüngen 24 ausgeübt. Die Klemmkraft, welche durch die Klemmelemente 30, 32 ausgeübt wird, ist entsprechend so bemessen, dass ein Verkanten der an den Zentriervorsprüngen 24 mit ihrem Halsring anliegenden Flasche nicht auftritt, sondern diese in einer exakten axialen Ausrichtung mit dem Hub des Verschlusskonus angeordnet ist.

Die Klemmvorrichtung 3 in Figur 2 ist in Form eines entsprechend profilierten Federbleches dargestellt.

In einer nicht gezeigten Variante kann die Klemmvorrichtung auch mit aktiven Klemmelementen, bei welchen der Klemmvorgang über die Betätigung eines Aktuators durchführbar ist, ausgebildet sein. Hierzu können beispielsweise die in Figuren 1 und 2 gezeigten Klemmelemente 30, 32 beweglich über einen Aktuator ansteuerbar sein und entsprechend der jeweiligen Maschinenposition auf dem Verschließerteilkreis geöffnet oder geschlossen werden. Die Ansteuerung über einen Aktuator hat den Vorteil, dass die Klemmkräfte der beiden Klemmelemente 30, 32 separat voneinander eingestellt werden können und damit die Zentrierung der in der Halsaufnahmetasche 20 aufgenommenen Flasche genau justiert werden kann.

In einer weiteren, nicht gezeigten Ausführungsform können die Klemmelemente beispielsweise federnd gelagerte Kugeln oder Walzen umfassen, wodurch ein Material schonendes Einbringen und Entnehmen der jeweiligen Flaschen vorgenommen werden kann und insbesondere das Auftreten von Schleifspuren auf dem Flaschenhals reduziert werden kann.

Soweit anwendbar können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

| | |
|---|---|
| 1 | Vorrichtung zum Aufnehmen von mit einem Halsring versehenen Flaschen |
| 2 | Halsführung |
| 20 | Halsaufnahmetasche |
| 22 | Verdrehsicherung |
| 24 | Zentriervorsprung |
| 3 | Klemmvorrichtung |
| 30 | Klemmelement |
| 32 | Klemmelement |

## Patentansprüche

1. Vorrichtung (1) zum Aufnehmen von mit einem Halsring versehenen Flaschen in einem Verschließer, umfassend eine Halsführung (2) mit einer Halsaufnahmetasche (20) zur Aufnahme des Halses der Flasche, wobei auf der Oberseite der Halsführung mindestens eine Verdrehsicherung (22) zum Eingriff mit der Unterseite des Halsringes vorgesehen ist,
**gekennzeichnet durch**
eine im Bereich der Halsführung (2) angeordnete Klemmvorrichtung (3) zum Halten des Halses der Flasche in der Halsaufnahmetasche (20).

2. Vorrichtung (1) gemäß Anspruch 1, **dadurch gekennzeichnet, dass** mit der Klemmvorrichtung (3) eine Klemmkraft zum Halten des Halses der Flasche im Wesentlichen in der Ebene der Halsaufnahmetasche (20) aufbringbar ist.

3. Vorrichtung (1) gemäß Anspruch 1 oder 2, **dadurch gekennzeichnet, dass** die Klemmvorrichtung (3) zwei Klemmelemente (30, 32) aufweist, welche symmetrisch zur Halsaufnahmetasche (20) angeordnet sind.

4. Vorrichtung (1) gemäß einem der vorstehenden Ansprüche, **dadurch gekennzeichnet, dass** die Klemmvorrichtung (3) mindestens ein passives Klemmelement (30, 32) umfasst, welches in Klemmrichtung auf die Halsaufnahmetasche (20) hin vorgespannt ist.

5. Vorrichtung (1) gemäß Anspruch 4, **dadurch gekennzeichnet, dass** das passive Klemmelement (30, 32) ein elastisches Material, bevorzugt einen elastischen Kunststoff oder ein elastisches Metall, besonders bevorzugt ein Federblech oder Federstahl, umfasst.

6. Vorrichtung (1) gemäß einem der vorstehenden Ansprüche, **dadurch gekennzeichnet, dass** die Klemmvorrichtung (3) mindestens ein aktives Klemmelement umfasst, bei welchem der Klemmvorgang über einen Aktuator durchführbar ist.

7. Vorrichtung (1) gemäß einem der vorstehenden Ansprüche, **dadurch gekennzeichnet, dass** die Klemmvorrichtung (3) mindestens ein federgelagertes Klemmelement umfasst, welches in Klemmrichtung auf die Halsaufnahmetasche (20) hin vorgespannt ist.

8. Vorrichtung (1) gemäß Anspruch 7, **dadurch gekennzeichnet, dass** das federnd gelagerte Klemmelement eine Rolle, eine Walze oder eine Kugel umfasst.

9. Vorrichtung (1) gemäß einem der vorstehenden Ansprüche, **dadurch gekennzeichnet, dass** die Verdrehsicherung (22) in eine Spikeplatte integriert ist, welche an der Halsführung (2) aufnehmbar ist und welche bevorzugt auch die Halsaufnahmetasche (20) umfasst.

10. Vorrichtung (1) gemäß einem der vorstehenden Ansprüche, **dadurch gekennzeichnet, dass** die Klemmvorrichtung (3) mindestens ein Klemmelement zum Eingriff mit dem Halsring aufweist.

11. Vorrichtung (1) gemäß einem der vorstehenden Ansprüche, **dadurch gekennzeichnet, dass** auf der Oberseite der Halsführung (2) Zentriervorsprünge (24) vorgesehen sind, über welche die Flasche an ihrem Halsring zentrierbar ist.

12. Schraubverschließer mit einem Verschließerkonus zum Verschließen von Flaschen mit einem Halsring durch Kunststoffschraubverschlüsse,
**gekennzeichnet durch**
eine unterhalb des Verschließerkonus angeordneten Vorrichtung (1) zum Aufnehmen von mit dem Halsring versehenen Flaschen gemäß einem der vorstehenden Ansprüche.
